# EUROPEAN PATENT APPLICATION

(11) **EP 1 489 584 A1**
(43) Date of publication of application: **22.12.2004**
(21) Application number: 03101816.1
(22) Date of filing: 19.06.2003
(51) Int. Cl.: G09F 19/12

(54) **Illuminable sign**

(71) Applicant: Alrec Sign & Display B.V., 3641 RZ Mijdrecht (NL)
(72) Inventor: Van der Plaat, Peter, 3645 KA, Vinkeveen (NL)
(74) Representative: Aalbers, Arnt Reinier

(57) **Abstract**

The invention relates to an illuminable sign (1) comprising a plate (2) of a light-transmitting material, at least one three-dimensional body (7), such as a convex strip, also of a light-transmitting material, in the form of a symbol, lettering, decoration or the like, and positioned on or over a surface of the plate (2), and a light source (4). The light source (4) is positioned along at least part of an edge of the plate, such that, when the light source (4) is switched on, light from the source is coupled into the plate (2). The illuminable sign according to the invention more closely resembles a neon sign.

## Description

The invention relates to an illuminable sign comprising a plate of a light-transmitting material, at least one three-dimensional body, such as a convex strip, also of a light-transmitting material, in the form of a symbol, lettering, decoration or the like, and positioned on or over a surface of the plate, and a light source.

Such signs are known and comprise a housing, for example in the form of a logo. The housing is provided with a light-transmitting plate, which comprises an opaque coating on the front side, in which openings are present, for example in the form of letters and/or a border. A strip having a convex upper side, which consists of a light-transmitting paste, is applied in said openings. TL tubes are mounted across the width of the plate, at least under the openings, which TL tubes cause the convex strips to light up.

It is an object of the present invention to provide an illuminable sign of the type described in the opening paragraph, which more closely resembles a neon sign.

To this end, the illuminable sign according to the invention is characterized in that the light source is positioned along at least part of an edge of the plate, such that, when the light source is switched on, light from the source is coupled into the plate. It is preferred that the plate or at least those parts of the plate on or over which the at least one three-dimensional body is positioned, is made of a transparent material, thus providing a clear and see-through area around such body or bodies and further enhancing the perception that the same is respectively are floating.

To improve coupling of the light into the three-dimensional body, it is preferred that the plate is provided with at least one groove and/or recess in the form of at least part of a symbol, lettering, decoration or the like and wherein the at least one three-dimensional body is positioned in at least part of this groove and/or recess or in register therewith, e.g. on the side opposite of the groove(s) or on an additional plate in front of the (main) plate, as will be discussed below.

In a further embodiment of the invention, the sign comprises at least two parallel or substantially parallel plates of a light-transmitting material. Thus, three-dimensional effects can be obtained e.g. by providing different decorations or lettering on different plates or by including plates of different colour or shades, for instance, increasingly darker towards the rear of the sign. Also, traditional neon mirror images, when looking at the rear side of a neon sign, can be avoided by placing an opaque plate between two light-transmitting plates with identical decorations or lettering. The at least two plates can be provided with one or more light sources for each plate. Alternatively, two or more plates can be illuminated by a common light source.

It is preferred that an additional plate of a transparent material is provided over the front surface of the plate. The (main) plate is thus protected from scratches, fingerprints, dirt and the like, which may cause light guided in the main plate to couple out, i.e. illuminate the said irregularities and render them all the more noticeable.

It appeared that the resemblance to traditional neon signs is further enhanced if the light source has a colour temperature in excess of 5000K, preferably in a range from 7000K to 10000K.

Within the framework of the present invention, the term "light-transmitting" is understood to mean both transparent (clear) and translucent (milky).

For the sake of completeness, it is noted that US 6,240,664 relates to a sign plate for an edge-illuminated sign. The sign plate includes a front image layer disposed on a front face of the transparent sheet, wherein the front image layer has a reflective surface. A rear image layer is disposed on a rear face of the transparent sheet substantially in registry with the front image layer, wherein the front image layer and the rear image layer are positioned so that the light within the transparent sheet is reflected from the reflective surface onto the rear image layer thereby to enhance illumination of the rear image layer. The sign plate has a structure such that a portion of the light within the transparent sheet forms an image of a halo or aura of light surrounding the rear image la. US 6,240,664 does not disclose three-dimensional bodies of a light-transmitting material.

Further, non pre-published European patent application EP 02080018.1 discloses an illuminated sign which comprises one or more light guides for coupling light from the light source into respectively the three-dimensional body or bodies. These light guide(s) make(s) it possible to capture light from, for example, one centrally disposed TL tube and couple said light into at least one three-dimensional body, so that an effective lighting of said body is obtained.

The invention will now be explained in more detail by means of several preferred embodiments as shown in the figures.
Fig. 1 shows a perspective view of a first illuminated sign according to the present invention.
Fig. 2 shows a cross-section of the embodiment of Fig. 1 provided with a housing.
Figs. 3A-3D show four different types of grooves containing a convex strip of a light-transmitting material.
Figs. 4A and 4B show two different ways of illuminating a sign according to the invention.
Figs. 5A-5E and 7 show cross-sections of six further embodiments of the sign according to the invention.
Fig. 6 shows cross-sections of two profiles employed in the embodiment of Fig. 5B.
Figs. 8A-8I show cross-sections of nine further embodiments of the sign according to the invention.

Identical components and components performing the same or substantially the same function are denoted by the same numerals.

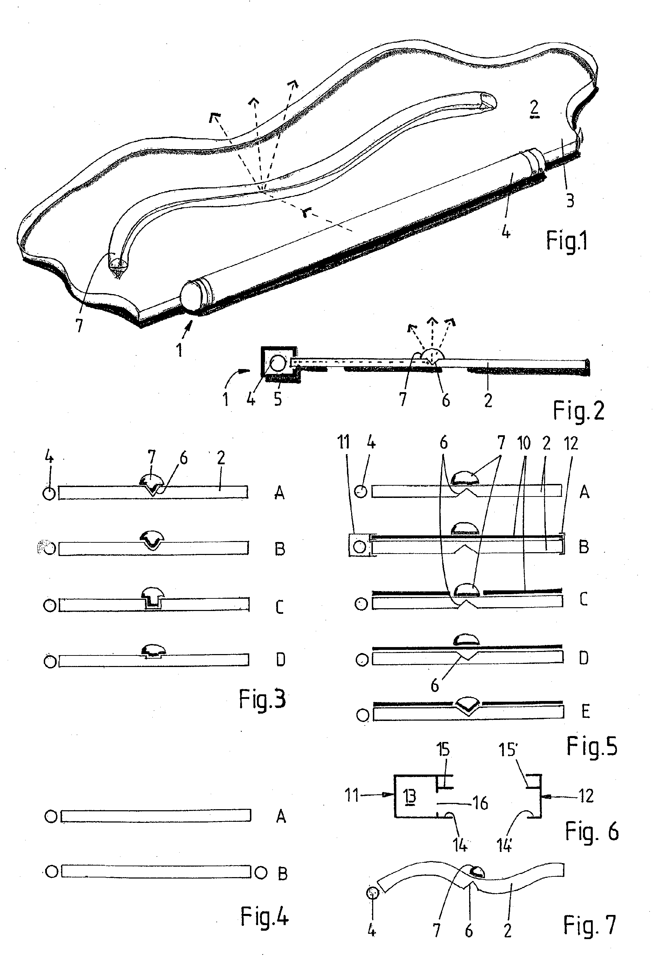

Figs. 1 and 2 show a perspective view and a cross-sectional view of a first illuminable sign 1 according to the invention, comprising a plate made of, for example, a transparent polymer, such as acrylate or PETG. The plate 2 is shaped to comprise a straight edge 3 and otherwise to corresponds to e.g. a logo. A light source, such as a TL-tube 4, a cold cathode fluorescent lighting (CCFL) or light emitting diode (LED), is positioned parallel to the edge 3 inside a housing (Fig. 2). The housing consists of an extruded profile 5, which, besides the TL-tube 4, accommodates a power supply (not shown) and which is attached to the plate 2 by means of clamping.

The front side of the plate 2, i.e. the side which faces viewers during use, is provided, by means of a milling cutter, with a groove 6 of triangular cross-section and in the form of a symbol, lettering, decoration or the like. The groove 6 has been filled, e.g. by means of a plotter, with a convex strip 7 of a UV-curable translucent paste, which has subsequently been hardened and adhered to the plate 2 by exposure to UV-radiation. Suitable pastes are known in themselves and preferably contain an UV-curable resin (e.g. acrylated urethane oligomer), a photo-initiator, a filler (e.g. silica) and colour pigments.

When the light source 4 is switched on, light from the source 4 (indicated by dotted lines) is coupled into the plate 2 and guided towards the groove. At flanks of the groove 6 that face the light source, light is transmitted to the convex strip 7 and subsequently emitted by the same. Light guided by the plate 2 is invisible to viewers, who will see through the transparent plate 2 and only see the light emitted by the translucent (milky) convex strip 7, which will be perceived, by the viewers, as a floating neon tube.

At this point it is noted that the sign according to the present invention has many advantages over traditional neon. For instance, it can be operated at low voltages, is easier to clean, can be equipped with a dimmer, requires no of less service and maintenance and is less vulnerable (i.e. no or less breakage).

Figs. 3A-3D show four different types of grooves containing a convex strip of a light-transmitting material, viz. grooves of triangular, semicircular, square, and rectangular cross-section. Other shapes, such as parabolic, can also be used.

The depth of the (at least one) groove is preferably in excess of 2 mm, more preferably in excess of 3 mm, and usually less than 15 mm. The depth can either be constant or variable along the length of the groove(s). For instance, if a symbol formed by the groove and the convex strip contains a straight line extending perpendicular to the light source, the section nearest the light source will receive more light directly from the transparent plate than sections farther removed from the light source. However, if the depth of the groove increases in a direction away from the light source, the sections farther removed from the light source will also receive light directly from the plate. If the sign comprises two or more light sources, as shown in Fig. 4B, the depth of the groove could increase in a direction away from the first light source and than increase towards the second light source to obtain a homogeneous emission of light along the length of the groove. However, variation in depth can also be employed to deliberately cause relatively bright and relatively dark areas in the same groove or convex strip, e.g. to highlight or accentuate specific parts thereof.

Figs. 5A-5E and 7 show cross-sections of six further embodiments of the sign according to the invention.

The first of these embodiments comprises a triangular groove 6 in form of e.g. a symbol in the rear surface of a transparent plate 2. A convex strip 7 has been deposited on the front side of plate 2 in register with the groove 6. Light emitted by a light source 4 and coupled into the plate 2 is reflected upwards by the flank of the groove 6 nearest the light source 4 and into the convex strip 7.

The second embodiment is similar to the first embodiment. However, the front surface of the plate 2 has been provided with an additional plate 10 of a transparent material and the convex strip 7 has been deposited on this additional plate 10. This assembly and the light source 4 are held together by two profiles 11, 12, which are preferably made of aluminium and enlarged versions of which are shown in Fig. 6. The first profile 11 comprises a lumen 13 for accommodating a light source, such as a CCFL 4 having a diameter of less than 10 mm and a colour (equivalent blackbody) temperature of 9000 K, a first slot 14 for receiving the main plate 2 and a second slot 15 for receiving the additional plate 10. The first slot 14 communicates with the lumen 13 via a relatively wide opening 16 running the length of the profile 11. Light emitted by the light source 4 passes the opening 16 and is coupled into the plate 2. To prevent light from light from coupling into the additional plate 10, the second slot 15 is U-shaped (does not contain an opening) and thus optically isolated from the lumen 13. The second profile 12 comprises corresponding slots 14', 15' for receiving the opposite edges of the plates 2, 10.

The additional plate 10 serves to protect the (main) plate is from scratches, fingerprints, dirt and the like, which may cause light guided in the main plate to couple out, i.e. illuminate the said irregularities and render them all the more noticeable. Also, in case one of the plates 2, 10 is damaged during production or use, it is possible to replace just the damaged plate.

Figs. 5C-5E show further self-explanatory embodiments, wherein, in comparison to Fig. 5B, the symbols have been cut out from the additional plate 10 and the convex strips 7 have been positioned in the cut out portions (Fig. 5C), the groove 6 has been milled in the front side of the surface of the plate 2 (Fig. 5D), and a combination of these features (Fig. 5E).

The sign shown in Fig. 7 is identical to that shown in Fig. 5A, both in configuration and in operation, except for the fact that the plate 2 is curved instead of straight.

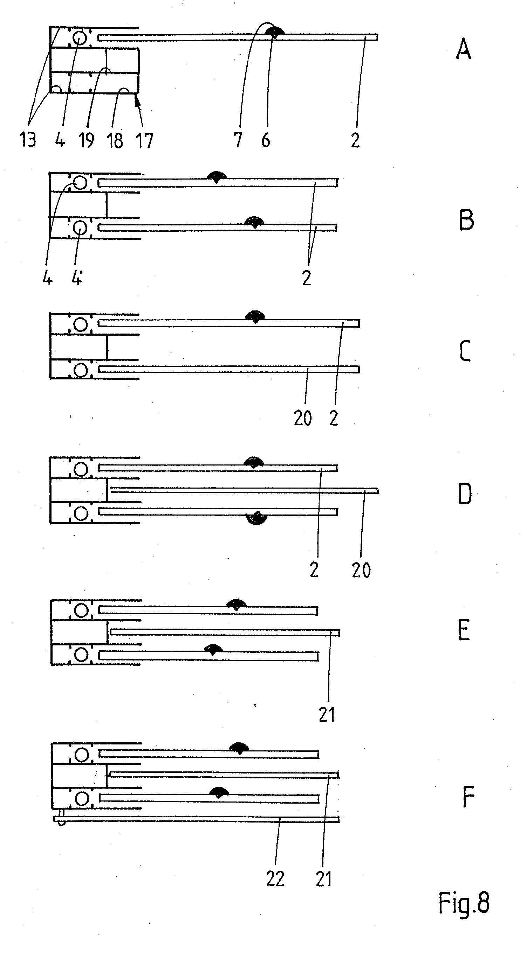

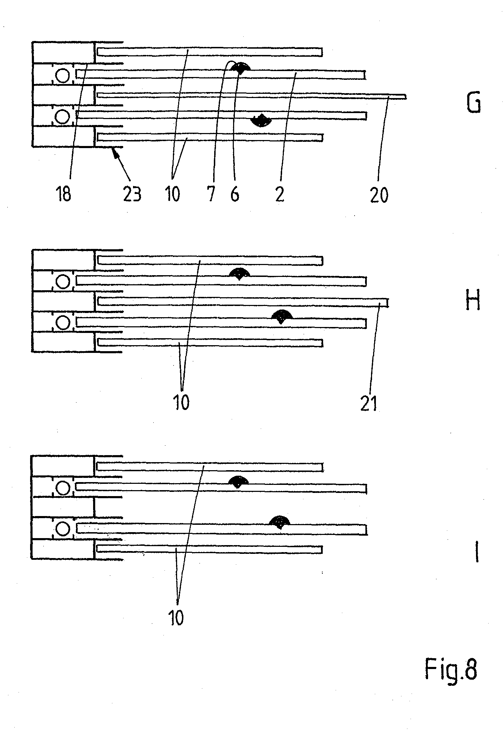

Figs. 8A-8I show cross-sections of nine further embodiments of the sign according to the invention.

The embodiments shown in Figs. 8A-8F all comprise the same profile 17 provided with two lumens 13, each suitable for accommodating a light source 4, two slots 18 for receiving two transparent plates 2 and one central slot 19 for receiving a further plate or the like. The embodiments in Figs. 8A-8C comprise respectively a single plate 2, provided with at least one groove 6 containing a convex strip 7 in the form of a symbol, lettering, decoration or the like (Fig. 8A), two such plates 2 with different symbols (Fig. 8B), and one such plate and a mirror or an opaque plate 20 provided with printed matter facing the transparent plate 2 (Fig. 8C). The embodiments in Figs. 8D-8F comprises respectively, two transparent plates 2, separated by an opaque plate 20 or a double-sided mirror and provided with identical symbols both facing away from the opaque plate 20 (Fig. 8D), two such plates 2 separated by a transparent and optionally coloured third plate 21 and provided with different symbols facing in the same direction (Fig. 8E), and a similar arrangement comprising an opaque rear plate 22 provided with printed matter (Fig. 8F).

The embodiments shown in Figs. 8G-8I all comprise a profile 23, provided with two lumens 13, each suitable for accommodating a light source 4, two slots 18 for receiving two transparent plates 2 and three additional slots 19 for receiving further plates or the like.

Fig. 8G shows a sign comprising two plates 2, each provided with at least one groove 6 containing a convex strip 7 in the form of a symbol, lettering, decoration or the like, and separated by an opaque plate 20 or double-sided mirror. The symbols on the plates 2 are identical and facing away from the opaque plate 20. An additional protective plate 10 is placed in front of each of the plates 2.

In the sign according to Fig. 8H, the plates 2 are separated by a transparent and optionally coloured plate 21 and provided with different symbols facing in the same direction. Further, additional front and rear plates 10 have been provided. The rear plate 10 can optionally be provided with printed matter.

The sign according to Fig. 8I is identical to the sign shown in Fig. 8H, except for the absence of the transparent and optionally coloured plate 21.

The invention is not restricted to the embodiments as described above, of course, which can be varied in many ways within the scope of the invention as defined in the claims. For instance, the profiles containing the light source may be internally coated with a reflective layer. Further, the three-dimensional body or bodies may comprise e.g. concave or bi- or multilobal portions.

## Claims

1. An illuminable sign (1) comprising a plate (2) of a light-transmitting material, at least one three-dimensional body, such as a convex strip (7), also of a light-transmitting material, in the form of a symbol, lettering, decoration or the like, and positioned on or over a surface of the plate (2), and a light source (4), **characterised in that** the light source (4) is positioned along at least part of an edge (3) of the plate (2), such that, when the light source (4) is switched on, light from the source (4) is coupled into the plate (2).

2. Illuminable sign (1) according to claim 1, wherein the plate (2) or at least those parts of the plate (2) on or over which the at least one three-dimensional body (7) is positioned, is made of a transparent material.

3. Illuminable sign (1) according to claim 1 or 2, wherein the plate (2) is provided with at least one groove (6) and/or recess in the form of at least part of a figure, a sign, a decoration of the like and wherein the at least one three-dimensional body (7) is positioned in at least part of this groove (6) and/or recess or in register therewith.

4. Illuminable sign (1) according to claim 3, wherein the at least one groove (6) and/or recess is provided in the front surface of the plate (2).

5. Illuminable sign (1) according to claim 3 or 4, wherein the depth of the at least one groove (6) or recess varies along the figure, sign, decoration of the like.

6. Illuminable sign (1) according to claim 5, wherein the depth of the at least one groove (6) or recess increases in a direction away from the light source (4).

7. Illuminable sign (1) according any one of the claims 3-6, wherein the width of at least one the groove (6) is in excess of 3 mm, preferably in excess of 4 mm.

8. Illuminable sign (1) according to any one of the preceding claims, which comprises at least two parallel or substantially parallel plates (2) of a light-transmitting material.

9. Illuminable sign (1) according to claim 8, wherein at least two of the plates (2) are provided with at least one three-dimensional body, such as a convex strip (7), also of a light-transmitting material, in the form of a figure, a sign, a decoration of the like.

10. Illuminable sign (1) according to claim 8 or 9, wherein a further plate (20; 21) is provided between the at least two plates (2).

11. Illuminable sign (1) according to any one of the preceding claims, wherein an additional plate (10) of a transparent material is provided over the front surface of the plate (2).

12. Illuminable sign (1) according to claim 11, wherein at least the edge of the additional plate (10) nearest the light source (4) is optically separated from the said light source (4) so as to prevent light from the light source (4) from coupling directly into the additional plate (10).

13. Illuminable sign (1) according to any one of the preceding claims, which comprises at least two light sources (4, 4') positioned along different, preferably opposite, edges of the plate (2).

14. Illuminable sign (1) according to any one of the preceding claims, wherein the light source (4) has a colour temperature in excess of 5000K, preferably in excess of 7000K.

15. Illuminable sign (1) according to any one of the preceding claims, wherein the said at least one three-dimensional body (7) is comprised of a paste, preferably a UV-hardened or self-hardened paste.
